(19) Europäisches Patentamt
European Patent Office
Office européen des brevets

(11) Veröffentlichungsnummer: **0 001 292**
**B1**

(12) **EUROPÄISCHE PATENTSCHRIFT**

(21) Anmeldenummer: **78100977.4**

(22) Anmeldetag: **25.09.78**

(51) Int. Cl³: **C 07 F 9/165, A 01 N 57/12**

(54) **Halogenalkyldithiophosphorsäureester, Verfahren zu ihrer Herstellung sowie ihre Verwendung in Schädlingsbekämpfungsmitteln**

(30) Priorität: **27.09.77 DE 2743349**

(43) Veröffentlichungstag der Anmeldung:
**04.04.79 Patentblatt 79/07**

(45) Bekanntmachung des Hinweises auf die Patenterteilung:
**23.07.80 Patentblatt 80/15**

(84) Benannte Vertragsstaaten:
**BE CH DE FR GB LU NL SE**

(56) Entgegenhaltungen:
**JP - B - 75 017466**

(73) Patentinhaber: **BASF Aktiengesellschaft**
**Carl-Bosch-Strasse 38**
**D - 6700 Ludwigshafen (DE)**

(72) Erfinder: **Loeffler, Hans-Peter, Dr.**
**Defreggerstrasse 14**
**D - 6700 Ludwigshafen (DE)**
**Adolphi, Heinrich, Dr.**
**Kalmitweg 11**
**D - 6703 Limburgerhof (DE)**
**Kiehs, Karl, Dr.**
**Sudetenstrasse 22**
**D - 6840 Lampertheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 292 B1

# Halogenalkyldithiophosphorsäureester, Verfahren zu ihrer Herstellung sowie ihre Verwendung in Schädlingsbekämpfungsmitteln

Die Erfindung betrifft neue Halogenalkyldithiophosphorsäureester, ein Verfahren zu ihrer Herstellung und Schädlingsbekämpfungsmittel, die diese Halogenalkyldithiophosphorsäureester als Wirkstoffe enthalten.

Aus der DE—OS 1 618 992 ist bekannt, daß O-Alkyl-S-alkyl-S-halogenalkyl-bisthiolphosphate insektizid wirksam sind. Als wirksame Verbindungen sind allerdings nur solche Bisthiolphosphate beschrieben, die als Estergruppierung neben S-Halogenalkylgruppen S-Phenylalkylgruppen, wie S-Benzyl, S-1-Phenyläthyl, S-2-Phenyläthyl oder S-3-Phenylpropyl, tragen.

Es wurde überraschenderweise gefunden, daß Bisthiolphosphate, bei denen diese phenylsubstituierten Alkylgruppen durch unverzweigte oder verzweigte, unsubstituierte Alkylgruppen ersetzt sind, biologisch wesentlich wirksamer sind als die aus der DE—OS 1 618 992 bekannten Verbindungen. Sie sind insbesondere geeignet zur Bekämpfung von schädlichen und lästigen Insekten, Milben und Zecken.

Die erfindungsgemäßen Halogenalkyldithiophosphorsäureester haben die Formel I

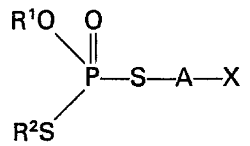

I,

in der

$R^1$ für den Methyl- oder Äthylrest,

$R^2$ für einen Alkylrest mit 2 bis 4 Kohlenstoffatomen,

A für einen unverzweigten oder verzweigten Alkylenrest mit 2 bis 4 Kohlenstoffatomen und

X für Chlor oder Brom stehen.

Gegenstand der Erfindung ist weiterhin ein Verfahren zur Herstellung von Halogenalkyldithiophosphorsäureestern der Formel I, das dadurch gekennzeichnet ist, daß man ein Dithiophosphorsäureestersaltz der Formel II

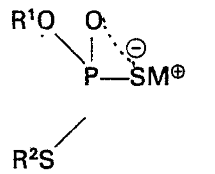

II,

in der $R^1$ und $R^2$ die oben genannten Bedeutungen haben und $M^{\oplus}$ für ein Alkalimetallion, für ein Äquivalent Erdalkaliion oder für ein gegebenenfalls substituiertes Ammoniumion steht, mit einem Halogenalkan der Formel III

$$Y—A—X$$

in der A und X die oben genannten Bedeutungen haben und Y für Halogen oder einen anderen leicht substituierbaren Rest steht, in einem Lösungs- oder Verdünnungsmittel umsetzt. Leicht substituierbare Reste Y, außer Halogen, sind beispielsweise Sulfonate, wie Tosylat.

Als Kationen $M^{\oplus}$ kommen Alkalimetallionen, wie Natrium oder Kalium, Erdalkaliionen, wie Calcium oder Magnesium, das Ammoniumion oder substituierte Ammoniumionen, wie Alkyl-, Dialkyl- oder Trialkylammoniumionen, in Betracht.

Die Umsetzung wird im allgemeinen in gegenüber den Reaktionsteilnehmern inerten Lösungs- oder Verdünnungsmitteln durchgeführt. Geeignet sind beispielsweise Ketone, wie Aceton, Methyläthylketon, Diäthylketon; aromatische Kohlenwasserstoffe, wie Toluol, Xylole; Nitrile, wie Acetonitril; Ester, wie Essigsäureäthylester; Dimethylformamid.

Die Umsetzung kann in einem zweiphasigen System aus Wasser und dem Halogenalkan als zweiter Phase durchgeführt werden. Außerdem können dem Reaktionsgemisch Reaktionsbeschleuniger, beispielsweise geringe Mengen Dimethylformamid, zugesetzt werden.

Die Reaktionstemperatur ist eine Funktion der Reaktivität des Halogenalkans und kann innerhalb eines größeren Bereichs variiert werden. Zweckmäßigerweise arbeitet man in einem Bereich von 30 bis 100°C.

Die Ausgangsstoffe können in äquimolarem Verhältnis eingesetzt werden. Allerdings kann es auch erforderlich sein, das Halogenalkan im Überschuß einzusetzen, wobei die Größe des Überschusses von der relativen Substituierbarkeit der Substituenten X und Y im Halogenalkan und von der Beweglichkeit des Halogenatoms X im Endprodukt abhängt. Nicht umgesetztes Halogenalkan kann am Ende der Reaktion zurückgewonnen werden.

Die Ausgangsverbindungen der Formeln II und III sind bekannt und können analog bekannten Methoden hergestellt werden.

Verbindungen der Formel I, in denen $R^1$, $R^2$ und X die oben genannten Bedeutungen haben, und A für $-(CH_2)_2-$ steht, können außerdem durch Addition von Sulfenylhalogeniden an Äthylen entsprechend folgender Reaktionsgleichung hergestellt werden:

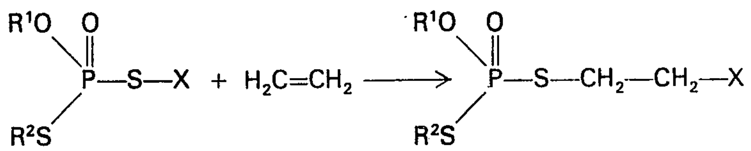

Diese Verbindungen kann man ebenfalls durch Umsetzung von Phosphorylhalogenid mit Äthylensulfid entsprechend folgender Reaktionsgleichung erhalten:

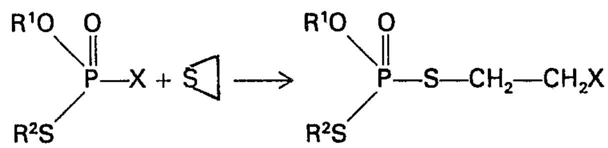

Eine weitere Synthese dieser Verbindungen geht von dem bekannten Phospholan IV aus, welches sich in einer grundsätzlich beschriebenen Reaktion mit dem Sulfenylhalogenid $R^2-S-X$ unter Ringöffnung zu V umsetzt. Dieses kann mit Natriumäthanolat oder Natriummethanolat in das gewünschte Endprodukt überführt werden.

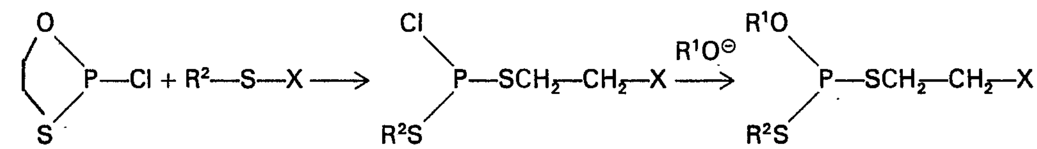


IV V

Die folgenden Beispiele erläutern die Herstellung der neuen Verbindungen:

1. Herstellung von S-2-Bromäthyl-S-n-propyl-O-äthyl-bis-thiophosphat

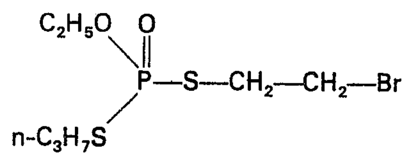

Zu 525 g 1,2-Dibromäthan in 500 ml Acetonitril gibt man bei 80°C portionsweise unter Rühren innerhalb von 3 Stunden 166,5 g Kalium-O-äthyl-S-n-propyl-dithiophosphat. Man rührt 2 Stunden lang bei 80°C nach, filtriert, destilliert das Lösungsmittel und überschüssiges 1,2-Dibromäthan ab. Der Rückstand wird in 800 ml Methylenchlorid aufgenommen, viermal mit Wasser gewaschen und über Natriumsulfat getrocknet. Nach Abziehen des Lösungsmittels werden flüchtige Verunreinigungen aus dem Rückstand bei 70°C und 0,05 Torr entfernt. Man erhält 108 g Endprodukt; $n_D^{24}$ 1.5402.

2. Herstellung von S-2-Chloräthyl-S-n-propyl-O-äthyl-bis-thiolphosphat

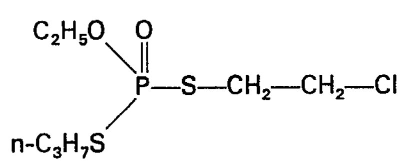

17,2 g N,N-Dimethylammonium-O-äthyl-S-n-propyl-dithiophosphat, 50 ml Wasser, 28,6 g 1-Brom-2-chloräthan und 2 ml N,N-Dimethylformamid werden 12 Stunden lang auf 60°C erwärmt. Nach dem Abkühlen werden 300 ml Chloroform zugegeben. Man wäscht dreimal mit Wasser, trocknet und engt ein. Man erhält 7 g eines schwach gelben Öls; $n_D^{28}$ 1.5192.

In entsprechender Weise können folgende Verbindungen der Formel I

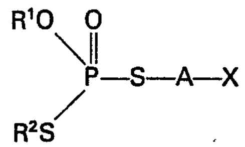

hergestellt werden:

| Nr. | $R^1$ | $R^2$ | A | X | physikal. Daten |
|---|---|---|---|---|---|
| 1 | $C_2H_5$ | n-$C_3H_7$ | $-(CH_2)_2-$ | Br | $n_D^{24}$ 1.5402 |
| 2 | $C_2H_5$ | i-$C_3H_7$ | $-(CH_2)_2-$ | Br | $n_D^{23}$ 1.5375 |
| 3 | $C_2H_5$ | n-$C_3H_7$ | $-(CH_2)_3-$ | Cl | $n_D^{23}$ 1.5180 |
| 4 | $C_2H_5$ | n-$C_3H_7$ | $-(CH_2)_2-$ | Cl | $n_D^{28}$ 1.5192 |
| 5 | $C_2H_5$ | n-$C_3H_7$ | $-(CH_2)_3-$ | Br | $n_D^{31}$ 1.5289 |
| 6 | $C_2H_5$ | n-$C_3H_7$ | $-CH_2-CH(CH_3)-CH_2-$ | Cl | $n_D^{22}$ 1.5112 |
| 7 | $C_2H_5$ | n-$C_3H_7$ | $-CH_2-CH(CH_3)-$ | Br | $n_D^{29}$ 1.5240 |
| 8 | $C_2H_5$ | sec.-$C_4H_9$ | $-(CH_2)_2-$ | Br | $n_D^{25}$ 1.5278 |
| 9 | $C_2H_5$ | sec.-$C_4H_9$ | $-(CH_2)_2-$ | Cl | $n_D^{23}$ 1.5170 |
| 10 | $C_2H_5$ | sec.-$C_4H_9$ | $-(CH_2)_3-$ | Br | $n_D^{24}$ 1.5258 |
| 11 | $C_2H_5$ | sec.-$C_4H_9$ | $-(CH_2)_3-$ | Cl | $n_D^{23}$ 1.5152 |
| 12 | $C_2H_5$ | i-$C_3H_7$ | $-(CH_2)_2-$ | Cl | |
| 13 | $C_2H_5$ | i-$C_3H_7$ | $-(CH_2)_3-$ | Br | |
| 14 | $C_2H_5$ | i-$C_3H_7$ | $-(CH_2)_3-$ | Cl | |
| 15 | $C_2H_5$ | i-$C_4H_9$ | $-(CH_2)_2-$ | Br | $n_D^{28}$ 1.5312 |
| 16 | $C_2H_5$ | n-$C_4H_9$ | $-(CH_2)_2-$ | Cl | $n_D^{31}$ 1.5134 |
| 17 | $C_2H_5$ | n-$C_4H_9$ | $(CH_2)_3-$ | Br | $n_D^{33}$ 1.5183 |
| 18 | $C_2H_5$ | n-$C_4H_9$ | $-(CH_2)_3-$ | Cl | $n_D^{24}$ 1.5149 |
| 19 | $C_2H_5$ | i-$C_4H_9$ | $-(CH_2)_2-$ | Br | $n_D^{27}$ 1.5281 |
| 20 | $C_2H_5$ | i-$C_4H_9$ | $-(CH_2)_2-$ | Cl | $n_D^{26}$ 1.5103 |
| 21 | $C_2H_5$ | i-$C_4H_9$ | $-(CH_2)_3-$ | Br | $n_D^{23}$ 1.5276 |
| 22 | $C_2H_5$ | i-$C_4H_9$ | $-CH_2)_3-$ | Cl | $n_D^{32}$ 1.5092 |
| 23 | $CH_3$ | n-$C_3H_7$ | $-(CH_2)_2-$ | Br | |
| 24 | $C_2H_5$ | $C_2H_5$ | $-(CH_2)_2-$ | Br | $n_D^{21}$ 1.5462 |
| 25 | $C_2H_5$ | $C_2H_5$ | $-(CH_2)_2-$ | Cl | $n_D^{24}$ 1.5289 |
| 26 | $C_2H_5$ | $C_2H_5$ | $-(CH_2)_3-$ | Br | $n_D^{28}$ 1.5359 |
| 27 | $C_2H_5$ | $C_2H_5$ | $-(CH_2)_3-$ | Cl | |
| 28 | $C_2H_5$ | n-$C_3H_7$ | $-(CH_2)_4-$ | Br | $n_D^{23}$ 1.5300 |
| 29 | $C_2H_5$ | n-$C_3H_7$ | $-(CH_2)_4-$ | Cl | $n_D^{27}$ 1.5122 |

Die neuen Halogenalkyldithiophosphorsäureester eignen sich zur Bekämpfung von Schädlingen aus der Ordnung der Schmetterlinge (Lepidoptera), aus der Ordnung der Käfer (Coleoptera), aus der Ordnung der Zweiflügler (Diptera), aus der Ordnung der Hautflügler (Hymenoptera), aus der Ordnung der Wanzen (Heteroptera), aus der Ordnung der Termiten (Isoptera) sowie zur Bekämpfung der zu der Klasse der Arachnoidea gehörenden Milben und Zecken (Acarina).

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden, indem man sie auf die Schädlinge oder deren Lebensraum einwirken läßt.

Besonders wirksame Verbindungen sind solche der Formel I, bei denen A für den Athylenrest steht. Insbesondere wirksam sind Verbindungen dieser Struktur, bei denen $R^1$ Äthyl und $R^2$ Propyl, insbesondere n-Propyl, bedeuten.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln oder Granulaten durch Versprühen, Vernebeln, Verstäuben, Versteuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten und Öldispersionen kommen Mineralöfraktionen von mittlerem bis hohem Siedepunkt, wei Kerosin oder Dieselöl, ferner Kohlenteeröle sowie Öle pflanzelichen oder tierischen Ursprungs, aliphatische, cycloaliphatische und aromatische Kohlenwasserstoffe, z.B. Benzol, Tolulol, Xylol, Paraffin, Tetrahydronaphthalin, alkylierte Naphthaline oder deren Derivate, z.B. Methanol, Athanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten,

Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe sind zu nennen:

Alkali-, Erdalkali-, Ammoniumsalze von Ligninsulfonsäure, Naphthalinsulfonsäure, Phenolsulfonsäuren, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Poloxyäthylenoctylphenoläther, äthoxyliertes Isooctylphenol. Octylphenol, Nonylphenol, Alkylphenolpolyglykoläther, Tributylphenylpolglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogen-granulate, können durch Bindung der Wirkstoffe an feste Trägerstoffe hergestellt werden. Feste Trägerstoff sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,0001 bis 10 %, vorzugsweise zwischen 0,01 und 1 %.

Die Wirkstoffe können auch mit gutem Erfolg im Ultra-Low-Volume-Verfahren (ULV) verwendet werden, wobe es möglich ist, Formulierungen mit mehr als 95 Gew.% Wirkstoff oder sogar den 100 %igen Wirkstoff allein auszubringen.

Mögliche Formulierungen sind beispielsweise:

1. 250 g Wirkstoff (z.B. S-2-Bromäthyl-S-n-propyl-O-äthyl-bisthiolphosphat)
   15 g Calcium-Dodecylbenzolsulfonat
   35 g oxäthyliertes Rizinusöl
   50 g oxäthyliertes Nonylphenol
   ad 1 000 ml Xylol.
2. 20 Teile S-2-Chloräthyl-S-n-propyl-O-äthyl-bisthiolphosphat werden mit 2 Teilen Calciumsalz der Dodecylbenzolsulfonsäure, 8 Teilen Fettalkohol-polyglykoläther, 2 Teilen Natriumsalz eines Phenolsulfonsäureharnstoff-formaldehyd-kondensats und 68 Teilen eines paraffinischen Mineralöls innig vermischt. Man erhält eine stabile ölige Dispersion.
3. 3 Gewichtsteile S-3-Chlor-n-propyl-S-n-propyl-O-äthylbisthiolphosphat werden mit 97 Gewichtsteilen feinteiligem Kaolin innig vermischt. Man erhält auf diese Weise ein Stäubemittel, das 3 Gew.% des Wirkstoffs enthält.
4. 20 Gewichtsteile S-3-Chloro-n-propyl-S-sec.-butyl-O-äthyl-bisthiolphosphat werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxide an 1 Mol Ricinusöl besteht. Durch Eingießen und feines Verteilen der Lösung in 100 000 Gewichtsteilen Wasser erhält man eine wäßrige Dispergierung, die 0,01 Gew.% des Wirkstoffs enthält.

Zu den Einzelwirkstoffen oder ihren Mischungen können Öle verschiedenen Typs, Herbizide, Fungizide, Bakterizide, Insektizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Die folgenden Beispiele belegen die biologische Wirkung. Vergleichsmittel sind O,O-Dimethyl-O-[(1-methyl-2-chlor-2-diäthyl-carbamoyl)-vinyl]-phosphat (BE—PS 552 284; Nr. I), S-Benzyl-S-2-chloräthyl-O-äthyl-bisthiol-phosphat (DE—OS 1 618 992; Nr. II), S-2-Bromäthyl-O,O-diäthyl-phosphordithioat (DE—AS 1 005 058; Nr. III) und S-Chlormethyl-O,O-diäthyl-phosphordithioat (DE—OS 1 925 468; Nr. IV).

BEISPIEL A

Kontaktwirkung auf Schaben (Blatta orientalis)

Der Boden eines 1 1-Glases wird mit der acetonischen Lösung des Wirkstoffes behandelt. Nach Verdunsten des Lösungsmittels setzt man je Glas 5 adulte Schaben. Die Mortalitätsrate wird nach 48 Stunden bestimmt.

| Wirkstoff Nr. | Wirkstoffmenge pro Glas [mg] | Mortalitätsrate [%] |
|---|---|---|
| 1 | 0,2 | 100 |
| | 0,1 | 80 |
| 2 | 0,2 | 100 |
| | 0,1 | 80 |
| 3 | 0,2 | 100 |
| 4 | 0,1 | 100 |
| 6 | 0,2 | 100 |
| | 0,1 | 80 |
| 7 | 0,2 | 100 |
| 8 | 0,05 | 100 |
| 9 | 0,2 | 100 |
| 10 | 0,2 | 100 |
| 11 | 0,1 | 100 |
| I | 0,1 | 40 |
| II | 0,5 | 80 |
| III | 1,0 | 80 |

BEISPIEL B

Kontaktwirkung auf Stubenfliegen (Musca domestica); Dauerkontakt

Beide Teile einer Petrischale von 10 cm Durchmesser werden mit insgesamt 2 ml der acetonischen Wirkstofflösung ausgekleidet. Nach Verdunsten des Lösungsmittels (ca. 30 Minuten) bringt man je 10 Fliegen in die Schalen. Die Mortalitätsrate wird nach 4 Stunden ermittelt.

| Wirkstoff Nr. | Wirkstoffmenge [mg] | Mortalitätsrate [%] |
|---|---|---|
| 2 | 0,2 | 100 |
| 3 | 0,02 | 80 |
| 4 | 0,005 | 80 |
| 6 | 0,2 | 100 |
| 7 | 0,02 | 100 |
| 8 | 0,04 | 80 |
| 9 | 0,01 | 100 |
| 10 | 0,02 | 100 |
| 11 | 0,005 | 80 |
| I | 0,5 | 100 |
| | 0,2 | 20 |
| II | 2,0 | 50 |

BEISPIEL C

Zuchtversuch mit Drosophila melanogaster

40 ml eines Kleie-Agar-Nährbodens werden bei 50°C in Plastik-Flaschen (250 ml) gefült und dann mit 2 ml der wäßrigen Wirkstoffaufbereitung innig vermischt.

Nach dem Erkalten beimpft man den Nährboden mit einer Hefesuspension und gibt eine Filterpapierrolle zu. Anschließend setzt man 20 bis 40 ungefähr 6 Tage alte Drosophila ein und verschließt die Gefäße.

Die Auswertung erfolgt nach 10 Tagen.

| Wirkstoff Nr. | Konzentration der Wirkstoffaufbereitung [ppm] | |
|---|---|---|
| 1 | 5 | Entwicklungshemmung |
| 3 | 5 | Entwicklungshemmung |
| 4 | 5 | Entwicklungshemmung |
| 5 | 5 | Entwicklungshemmung |
| 6 | 5 | Entwicklungshemmung |
| 7 | 5 | Entwicklungshemmung |
| 8 | 2,5 | Entwicklungshemmung |
| 9 | 1,0 | Entwicklungshemmung |
| 10 | 2,5 | Entwicklungshemmung |
| 11 | 2,5 | Entwicklungshemmung |
| I | 25 | Entwicklungshemmung |
| | 10 | unwirksam |

BEISPIEL D

Kontaktwirkung auf Kornkäfer (Sitophilus granaria)

Petrischalen von 10 cm Durchmesser werden mit acetonischen Wirkstofflösungen ausgekleidet. Nach Verdunsten des Lösungsmittels belegt man die Schalen mit 100 Kornkäfer. Nach 4 Stunden werden die Käfer in unbehandelte Pappschälchen überführt, und es wird beobachtet, wieviele der Tiere noch in der Lage sind, dieses Gefäß zu verlassen.

| Wirkstoff Nr. | Wirkstoffmenge pro Schale [mg] | Mortalitätsrate [%] |
|---|---|---|
| 1 | 0,1 | 100 |
| 3 | 0,1 | 100 |
| 4 | 0,1 | 80 |
| 5 | 0,1 | 80 |
| 6 | 0,1 | 100 |
| 7 | 0,1 | 100 |
| 8 | 0,02 | 100 |
| 9 | 0,2 | 100 |
| 10 | 0,05 | 80 |
| 11 | 0,05 | 80 |
| I | 1,0 | 100 |
| | 0,2 | unwirksam |
| III | 0,2 | unwirksam |
| IV | 0,2 | unwirksam |

BEISPIEL E

Kontaktwirkung auf Reismehlkäfer (Tribolium castaneum) (Malathion-resistent)

Reismehlkäfer werden innerhalb von Glasringen mit einem Durchmesser von 4,5 cm 24 Stunden lang auf mit acetonischer Wirkstofflösung behandeltem Rundfilter (Durchmesser 0,7 cm) exponiert.

| Wirkstoff Nr. | Wirkstoffmenge pro Rundfilter [mg] | Mortalitätsrate [%] |
|---|---|---|
| 1 | 0,25 | 100 |
| 2 | 0,12 | 100 |
| 3 | 0,25 | 100 |
| 6 | 0,25 | 100 |
| I | 0,5 | 100 |
| | 0,15 | 40 |

BEISPIEL F

Zuchtversuch mit Stubenfliegen (Musca domestica)

50 g eines Nährbodens aus
100 Teilen Wasser
10 Teilen Bäckerhefe
10 Teilen Trockenmilch
1 Teil Agar

werden in warmen Zustand mit der wäßrigen Aufbereitung des Wirkstoffes gündlich durchmischt. Nach Erkalten belegt man den Nährboden mit ungefähr 0,1 ml Fliegeneiern und beobachtet deren Entwicklung über eine Woche. Die Versuchstemperatur liegt bei 20°C.

| Wirkstoff Nr. | minimale Wirkstoffkonzentration der Aufbereitung [ppm], bei der Entwicklungshemmung eintritt | |
|---|---|---|
| 1 | 1 | Entwicklungshemmung |
| I | 10 | Entwicklungshemmung |

**Patentansprüche**

1. Halogenalkyldithiophosphorsäureester der Formel I

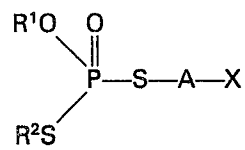

I,

in der
$R^1$ für den Methyl- oder Äthylrest,
$R^2$ für einen Alkylrest mit 2 bis 4 Kohlenstoffatomen,
A für einen unverzweigten oder verzweigten Alkylenrest mit 2 bis 4 Kohlenstoffatomen und
X für Chlor oder Brom stehen.

2. S-2-Chloräthyl-S-n-propyl-O-äthyl-bisthiolphosphat.

3. S-2-Bromäthyl-S-n-propyl-O-äthyl-bisthiolphosphat.

4. Verfahren zur Herstellung von Halogenalkyldithiophosphorsäureestern der Formel I

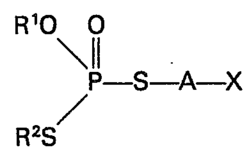

I

in der
$R^1$ für den Methyl- oder Äthylrest,
$R^2$ für einen Alkylrest mit 2 bis 4 Kohlenstoffatomen,
A für einen unverzweigten oder verzweigten Alkylenrest mit 2 bis 4 Kohlenstoffatomen und
X für Chlor oder Brom
stehen, *dadurch gekennzeichnet*, daß man ein Dithiophosphorsäureestersalz of Formel II

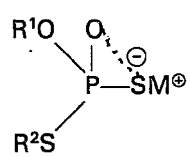

II,

in der
$R^1$ und $R^2$ die oben genannten Bedeutungen haben und
$M^{\oplus}$ für ein Alkalimetallion, für ein Äquivalent Erdalkaliion oder für ein gegebenenfalls substituiertes Ammoniumion steht,
mit einem Halogenalkan der Formel III

Y—A—X III,

in der

A und X die oben genannten Bedeutungen haben und

Y für Halogen oder einen leicht substituierten Rest steht,

in einem Lösungs- oder Verdünnungsmittel umsetzt.

5. Schädlingsbekämpfungsmittel, enthaltend mindestens einen Halogenalkyldithiophosphorsäureester der Formel I

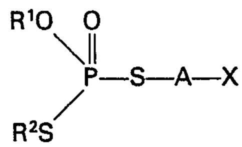

I,

in der

$R^1$ für den Methyl- oder Äthylrest,

$R^2$ für einen Alkylrest mit 2 bis 4 Kohlenstoffatomen,

A für einen unverzweigten oder verzweigten Alkylenrest mit 2 bis 4 Kohlenstoffatomen und

X für Chlor oder Brom

**Revendications**

1. Esters d'acide halogène-alkyl-dithiophosphorique de formule I

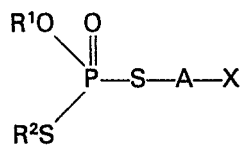

I

dans laquelle

$R^1$ est le reste méthyle ou éthyle,

$R^2$ est un reste alkyle en $C_2$ à $C_4$,

A est un reste alkylène non ramifié ou ramifié en $C_2$ à $C_4$, et

X est un chlore ou du brome.

2. S-2-Chloréthyl-S-n-propyl-O-éthyl-bisthiolphosphate.

3. S-2-Brométhyl-S-n-propyl-O-éthyl-bisthiolphosphate.

4. Procédé pour préparer les esters d'acide halogène-alkyl-dithiophosphorique de formule I

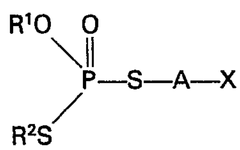

I

dans laquelle

$R^1$ est le reste méthyle ou éthyle,

$R^2$ est un reste alkyle en $C_2$ à $C_4$,

A est un reste alkylène non ramifié ou ramifié en $C_2$ à $C_4$, et

X est un chlore ou du brome

caractérisé par le fait qu'on fait réagir un sel d'ester d'acide dithiophosphorique de formule II

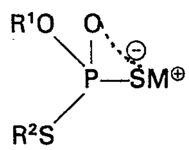

II

dans laquelle

$R^1$ et $R^2$ ont les significations indiquées et

$M^{\oplus}$ est un ion de métal alcalin, un équivalent d'ion alcalinoterreux ou un ion ammonium éventuellement substitué, avec un halogéno-alcane de formule III

Y—A—X

dans laquelle

A et X ont lest significations indiquées et Y est un halogène ou un reste facilement substitué, dans un solvant ou un diluant.

5. Pesticide contenant ou moins un ester d'acide halogène-alkyl-dithiophosphorique de formule I

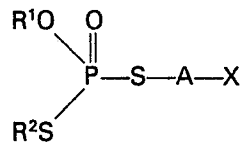

I

dans laquelle

$R^1$ est le reste méthyle ou éthyle,

$R^2$ est un reste alkyle en $C_2$ à $C_4$,

A est un reste alkylène non ramifié ou ramifié en $C_2$ à $C_4$, et

X est du chlore ou du brome.

**Claims**

1. Haloalkyldithiophosphoric acid esters of the formula I

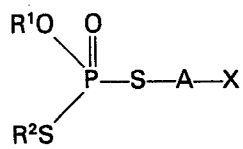

I

where

$R^1$ denotes methyl or ethyl,

$R^2$ denotes alkyl of 2 to 4 carbon atoms,

A denotes linear or branched alkylene of 2 to 4 carbon atoms, and

X denotes chlorine or bromine.

2. S-2-Chloroethyl-S-n-propyl-O-ethyl-bisthiolphosphate.

3. S-2-Bromoethyl-S-n-propyl-O-ethyl-bisthiolphosphate.

4. A process for the production of haloalkyldithiophosphoric acid esters of the formula

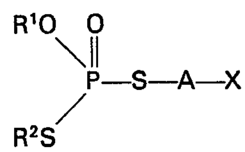

I,

where

$R^1$ denotes methyl or ethyl,

$R^2$ denotes alkyl of 2 to 4 carbon atoms,

A denotes linear or branched alkylene of 2 to 4 carbon atoms, and

X denotes chlorine or bromine,

*characterized in that* a dithiophosphoric acid ester salt of the formula II

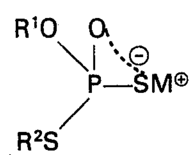

II,

where

$R^1$ and $R^2$ have the meanings given above and

$M^{\oplus}$ denotes an alkali metal ion, an equivalent of alkaline earth metal ion, or an unsubstituted or substituted ammonium ion,

is reacted with a haloalkane of the formula III

Y—A—X III,

where

A and X have the meanings given above and
Y denotes halogen or a readily substituted radical, in a solvent or diluent.

5. A pesticide containing at least one haloalkyldithiophosphoric acid ester of the formula I

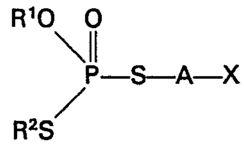

, I

where

$R^1$ denotes methyl or ethyl,
$R^2$ denotes alkyl of 2 to 4 carbon atoms,
A denotes linear or branched alkylene of 2 to 4 carbon atoms, and
X denotes chlorine or bromine.